# EUROPÄISCHE PATENTSCHRIFT

(11) **EP 3 271 412 B1**
(45) Veröffentlichungstag und Bekanntmachung des Hinweises auf die Patenterteilung: **05.02.2020**
(21) Anmeldenummer: 16709799.7
(22) Anmeldetag: 14.03.2016
(51) Int. Cl.: C08G 18/73, C08G 18/78, C08G 18/79, C09D 175/04, C08G 18/28, C08G 18/70

(54) **HYDROPHILE POLYISOCYANATE AUF BASIS VON 1,5-DIISOCYANATOPENTAN**
HYDROPHILIC POLYISOCYANATES BASED ON 1,5-DIISOCYANATOPENTANE
POLYISOCYANATES HYDROPHILES À BASE DE 1,5-DIISOCYANATOPENTANE

(30) Priorität: 16.03.2015 EP 15159292
(43) Veröffentlichungstag der Anmeldung: 24.01.2018
(73) Patentinhaber: Covestro Deutschland AG, 51373 Leverkusen (DE)
(72) Erfinder: LAAS, Hans-Josef, 51519 Odenthal (DE); EGGERT, Christoph, 50733 Köln (DE); YUVA, Nusret, 51399 Burscheid (DE); MEYER, Achim, 51379 Leverkusen (DE); BEHNKEN, Gesa, 50676 Köln (DE); HECKING, Andreas, 40764 Langenfeld (DE)
(74) Vertreter: Levpat
(86) Internationale Anmeldenummer: PCT/EP2016/055446
(87) Internationale Veröffentlichungsnummer: WO 2016/146579

(56) Entgegenhaltungen:
- EP-A1- 0 953 585
- EP-A1- 2 684 867
- WO-A1-2009/010469
- WO-A2-2014/048634
- US-A1- 2009 156 738

## Beschreibung

Die Erfindung betrifft eine Polyisocyanatzusammensetzung auf Basis von 1,5-Diisocyanatopentan, ein Verfahren zu ihrer Herstellung und ihre Verwendung zur Herstellung von Polyurethankunststoffen. Weitere Gegenstände sind ein, die Polyisocyanat-zusammensetzung enthaltendes Beschichtungsmittel sowie die aus dem Beschichtungsmittel erhältliche Beschichtung.

Wässrige Lacksysteme haben sich heute für verschiedene Anwendungsbereiche als umweltfreundliche Alternative zu lösemittelhaltigen Beschichtungsmitteln fest etabliert. Eine besondere Rolle als Rohstoff für qualitativ hochwertige wässrige Lacke spielen dabei hydrophil-modifizierte Polyisocyanate, da sie als wasserdispergierbare Vernetzerkomponenten die Formulierung wässriger Zweikomponenten-Polyurethan(2K-PUR)-Lacke ermöglichen.

Der weitaus größte Teil der heute im Markt kommerziell verfügbaren hydrophil-modifizierten Polyisocyanate leitet sich von Polyisocyanaten, insbesondere Polyisocyanuratpolyisocyanaten, des 1,6-Diisocyanatohexans (Hexamethylendiisocyanat, HDI) ab.

Hydrophile HDI-Polyisocyanate lassen sich bereits ohne Einsatz hoher Scherkräfte feinteilig und homogen in wässrige Lackbindemitteldispersionen einrühren, was die Applikationssicherheit und die optischen Eigenschaften, insbesondere Glanz und Transparenz der erhaltenen Beschichtungen, positiv beeinflusst. Gleichzeitig verzögert die Hydrophilie der Vernetzerkomponente allerdings auch deutlich die Lacktrocknung, da das Lösungsmittel Wasser länger im Film festgehalten wird. Für eine Reihe von Anwendungen, beispielsweise für die Holz-/Möbellackierung oder für die Autoreparatur- und Großfahrzeuglackierung ist aber gerade eine schnelle Trocknung gefragt.

Wasseremulgierbare PDI-Derivate, die als Vernetzungmittel für wässrige Polymerdispersionen dienen könnten waren bisher nicht bekannt.

Obwohl in einer Reihe von Veröffentlichungen, die die Hydrophilierung von Polyisocyanaten zum Gegenstand haben, beispielsweise in WO 2014/048634, EP-A 0 953 585, JP 11100426, JP 2000178335, JP 2004010777 oder JP 2007332193, innerhalb langer Listen als zur Herstellung von Polyisocyanaten geeigneter Ausgangsdiisocyanate auch PDI pauschal mit erwähnt, existieren bis heute keinerlei konkrete Beschreibungen hydrophil-modifizierter, wasserdispergierbarer Polyisocyanatgemische auf Basis von PDI.

Aufgabe der vorliegenden Erfindung war es daher, neue hydrophil-modifizierte Polyisocyanate zur Verfügung zu stellen, die sich für sämtliche Anwendungsgebiete wasserdispergierbarer Polyisocyanate eignen und insbesondere in Kombination mit üblichen wässrigen Lackbindemitteln Beschichtungen ergeben, die deutlich schneller trocknen als solche, die unter Verwendung der bekannten hydrophilen HDI-Polyisocyanate des Standes der Technik hergestellt wurden, und diesen gleichzeitig bezüglich sonstiger Lackeigenschaften in nichts nachstehen.

Diese Aufgabe wurde erfindungsgemäß durch einen Polyisocyanatzusammensetzung, umfassend eine Polyisocyanatkomponente A) und eine Emulgatorkomponente B), dadurch gekennzeichnet, dass die Polyisocyanatkomponente A) aus wenigstens einem Polyisocyanat auf Basis von 1,5-Diisocyanatopentan besteht und die Emulgatorkomponente B) wenigstens einen ionischen und/oder nichtionischen Emulgator enthält, wobei die Polyisocyanatkomponente A) wenigstens ein, durch Modifizierung von 1,5-Diisocyanatopentan erhältliches Polyisocyanat mit Uretdion-, Isocyanurat-, Allophanat-, Biuret-, Iminooxadiazindion- und/oder Oxadiazintrionstruktur umfasst, gelöst.

Gegenstand der Erfindung ist auch ein Verfahren zur Herstellung dieser hydrophil modifizierten Polyisocyanatzusammensetzungen sowie ihre Verwendung als Ausgangskomponenten bei der Herstellung von Polyurethankunststoffen, insbesondere als Vernetzer für wasserlösliche oder -dispergierbare Lackbindemittel oder -bindemittelkomponenten mit gegenüber Isocyanatgruppen reaktionsfähigen Gruppen.

In einer bevorzugten Ausführungsform bestehen die erfindungsgemäßen hydrophil-modifizierten Polyisocyanatzusammensetzungen auf Basis von 1,5-Diisocyanatopentan aus der Polyisocyanatkomponente A) sowie mindestens einem ionischen und/oder nichtionischen Emulgator B).

Polyisocyanatkomponente A), nachfolgend auch Ausgangspolyisocyanate A) genannt, zur Herstellung der erfindungsgemäßen hydrophilen Polyisocyanatzusammensetzung sind beliebige durch Modifizierung von 1,5-Diisocyanatopentan erhältliche oligomere Polyisocyanate mit Uretdion-, Isocyanurat-, Allophanat-, Biuret-, Iminooxadiazindion- und/oder Oxadiazintrionstruktur oder beliebige Gemische solcher PDI-Polyisocyanate. Die Herstellung dieser Polyisocyanate erfolgt nach an sich bekannten Methoden zur Isocyanatoligomerisierung, wie sie beispielsweise in J. Prakt. Chem. 336 (1994) 185 - 200 und EP-A 0 798 299 beschrieben sind, durch Umsetzung eines Teils der Isocyanatgruppen des PDI unter Bildung von Polyisocyanatmolekülen, die aus mindestens zwei Diisocyanatmolekülen bestehen, und einer sich in der Regel anschließenden destillativen oder extraktiven Abtrennung des nicht umgesetzten monomeren PDI. In einer Ausführungsform der Erfindung bestehen sie also aus den Ausgangskomponenten, den Reaktionsprodukten und eventuell noch kleinen Restmonomermengen. Konkrete Beispiele für derartige oligomere PDI-Polyisocyanate finden sich beispielsweise in EP-A 2 418 198, EP-A 2 684 867, JP 2010-121011, JP 2010-254764, JP 2010-265364, JP 2011-201863, JP 2012-152202, JP 2013-060542. Bevorzugt sind Polyisocyanate mit Isocyanurat- und/oder Allophanatstruktur, besonders bevorzugt mit Isocyanuratstruktur.

Das zur Herstellung der Polyisocyanatkomponente A) eingesetzte 1,5-Diisocyanatopentan ist auf verschiedene Weise, beispielsweise durch Phosgenierung in der Flüssig- oder Gasphase oder auf phosgenfreien Weg, wie z. B. durch thermische Urethanspaltung, ausgehend von vorzugsweise biotechnologisch durch Decarboxylierung der natürlich vorkommenden Aminosäure Lysin erhaltenem 1,5-Diaminopentan zugänglich.

Gegebenenfalls können bei der Herstellung der Polyisocyanatkomponente A) neben 1,5-Diisocyanatopentan weitere Diisocyanate mit aliphatisch, cycloaliphatisch, araliphatisch und/oder aromatisch gebundenen Isocyanatgruppen mitverwendet werden. Hierbei handelt es sich insbesondere um solche des Molekulargewichtsbereichs 140 bis 400, wie z. B. 1,4-Diisocyanatobutan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 2,4- und 2,6-Diisocyanato-1-methylcyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyana-todicyclohexylmethan, 2,4'-Diisocyanatodicyclohexylmethan, 1-Isocyanato-1-methyl-4(3)isocyanato-methylcyclohexan, Bis-(isocyanatomethyl)-norbornan, 1,3- und 1,4-Bis(isocyanatomethyl)benzol (XDI), 1,3- und 1,4-Bis-(2-isocyanato-prop-2-yl)-benzol (TMXDI), 2,4- und 2,6-Diisocyanatotoluol (TDI), 2,4'- und 4,4'-Diisocyanatodiphenylmethan (MDI), 1,5-Diisocyanatonaphthalin oder beliebige Gemische solcher Diisocyanate.

Diese bei der Herstellung der Polyisocyanatkomponenten A) gegebenenfalls mitzuverwendenden Diisocyanate kommen, falls überhaupt, in Mengen von bis zu 80 Gew.-%, vorzugsweise bis zu 50 Gew.-%, besonders bevorzugt bis zu 20 Gew.-%, bezogen auf die Gesamtmenge an eingesetzten Diisocyanaten zum Einsatz.

Gegenstand der Erfindung ist demnach eine Polyisocyanatzusammensetzung, wobei die Zusammensetzung eine mittlere Isocyanatfunktionalität von 1,8 bis 8,0, bevorzugt von 2,0 bis 7,0 und besonders bevorzugt von 2,3 bis 6,0 aufweist und/oder einen Gehalt an Isocyanatgruppen von 5,0 bis 26,0 Gew.-%, bevorzugt 6,0 bis 24,0 Gew.-% und besonders bevorzugt von 10,0 bis 23,0 Gew.-% aufweist.

Bevorzugt ist eine Polyisocyanatzusammensetzung mit einer Polyisocyanatkomponente A) aus wenigstens einem Polyisocyanurat mit einer mittleren NCO-Funktionalität von 2,3 bis 5,0 und/oder einem Gehalt an Isocyanatgruppen von 11,0 bis 26,0 Gew.-%.

Besonders bevorzugt ist eine Polyisocyanatzusammensetzung, umfassend eine Polyisocyanatkomponente A) und eine Emulgatorkomponente B), wobei die Polyisocyanatkomponente A) aus wenigstens einem Polyisocyanurat auf Basis von 1,5-Diisocyanatopentan mit einer mittleren NCO-Funktionalität von 2,3 bis 5,0 und/oder einem Gehalt an Isocyanatgruppen von 11,0 bis 26,0 Gew.-% besteht und die Emulgatorkomponente B) wenigstens einen ionischen und/oder nicht ionischen Emulgator enthält.

Ganz besonders bevorzugte Polyisocyanatkomponenten A) sind Isocyanuratstrukturen enthaltende Polyisocyanate, die unter Verwendung von PDI als alleinigem Diisocyanat hergestellt wurden und eine mittlere NCO-Funktionalität von 2,3 bis 5,0, vorzugsweise von 2,5 bis 4,5, einen Gehalt an Isocyanatgruppen von 11,0 bis 26,0 Gew.-%, vorzugsweise von 13,0 bis 25,0 Gew.-% und einen Gehalt an monomerem PDI von weniger als 1,0 Gew.-%, vorzugsweise weniger als 0,5 Gew.-% aufweisen.

Die erfindungsgemäßen hydrophil-modifizierten Polyisocyanatzusammensetzung auf Basis von 1,5-Diisocyanatopentan enthalten neben den Polyisocyanatkomponenten A) mindestens einen ionischen und/oder nichtionischen Emulgator B).

Hierbei handelt es sich um beliebige grenzflächenaktive Stoffe, die aufgrund ihrer Molekülstruktur in der Lage sind, Polyisocyanate bzw. Polyisocyanatzusammensetzung in wässrigen Emulsionen über einen längeren Zeitraum, bevorzugt bis zu 8 Stunden, zu stabilisieren.

Ebenfalls Gegenstand der Erfindung ist ein Verfahren zur Herstellung der Polyisocyanatzusammensetzung, wobei die Polyisocyanatkomponente A) mit der Emulgatorkomponente B) vermischt wird oder die Emulgatorkomponente B) durch anteilige Umsetzung von Polyisocyanaten der Polyisocyanatkomponente A) mit ionischen und/oder nichtionischen Verbindungen, die gegenüber Isocyanatgruppen reaktive Gruppen tragen, in der Polyisocyanatkomponente A) gebildet wird.

Eine bevorzugte Art nichtionischer Emulgatoren B) stellen beispielsweise Umsetzungsprodukte B1) der Polyisocyanatkomponenten A) mit hydrophilen Polyetheralkoholen dar.

Geeignete hydrophile Polyetheralkohole sind ein- oder mehrwertige, im statistischen Mittel 5 bis 50 Ethylenoxideinheiten pro Molekül aufweisende Polyalkylenoxidpolyetheralkohole, wie sie in an sich bekannter Weise durch Alkoxylierung geeigneter Startermoleküle zugänglich sind (siehe z. B. Ullmanns Encyclopädie der technischen Chemie, 4. Auflage, Band 19, Verlag Chemie, Weinheim S. 31 - 38). Solche Startermoleküle können beispielsweise beliebige ein- oder mehrwertige Alkohole des Molekulargewichtsbereiches 32 bis 300 sein, wie z. B. Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n Tetradecanol, n-Hexadecanol, n-Octadecanol, Cyclohexanol, die isomeren Methyl-cyclohexanole, Hydroxymethylcyclohexan, 3-Methyl-3-hydroxymethyloxetan, Benzylalkohol, Phenol, die isomeren Kresole, Octylphenole, Nonylphenole und Naphthole, Furfurylalkohol, Tetrahydrofurfurylalkohol, 1,2-Ethandiol, 1,2- und 1,3-Propandiol, die isomeren Butandiole, Pen-tandiole, Hexandiole, Heptandiole und Octandiole, 1,2- und 1,4-Cyclohexandiol, 1,4-Cyclohexandi-methanol, 4,4'-(1-Methylethyliden)-biscyclohexanol, 1,2,3-Propantriol, 1,1,1-Trimethylolethan, 1,2,6-Hexantriol, 1,1,1-Trimethylolpropan, 2,2-Bis(hydroxymethyl)-1,3-propandiol oder 1,3,5-Tris(2-hydroxyethyl)-isocyanurat.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können. Geeignete Polyetheralkohole sind entweder reine Polyethylenoxidpolyetheralkohole oder gemischte Polyalkylenoxidpolyether, deren Alkylenoxideinheiten zu mindestens 70 mol-%, vorzugsweise zu mindestens 80 mol-% aus Ethylenoxideinheiten bestehen.

Bevorzugte Polyalkylenoxidpolyetheralkohole sind solche, die unter Verwendung der oben genannten Monoalkohole des Molekulargewichtsbereiches 32 bis 150 als Startermoleküle hergestellt wurden. Besonders bevorzugte Polyetheralkohole sind reine Polyethylenglycolmonomethyletheralkohole, die im statistischen Mittel 5 bis 50, ganz besonders bevorzugt 5 bis 25 Ethylenoxideinheiten aufweisen.

Die Herstellung solcher bevorzugter nichtionischer Emulgatoren B1) ist prinzipiell bekannt und beispielsweise in EP-B 0 206 059 und EP-B 0 540 985 beschrieben.

Sie kann durch Umsetzung der Polyisocyanatkomponenten A) mit den genannten Polyetheralkoholen entweder in einem separaten Reaktionsschritt mit anschließendem Vermischen des erhaltenen Emulgators B1) mit den in eine hydrophile Form zu überführenden Polyisocyanatkomponenten A) oder aber in der Weise erfolgen, dass man die Polyisocyanatkomponenten A) mit einer entsprechenden Menge der Polyetheralkohole abmischt, wobei sich spontan ein erfindungsgemäßes hydrophiles Polyisocyanatgemisch bildet, das neben nicht umgesetztem Polyisocyanat A) den sich in situ aus dem Polyetheralkohol und einem Teil der Komponente A) bildenden Emulgator B) enthält.

Die Herstellung dieser Art nichtionischer Emulgatoren B1) erfolgt im allgemeinen bei Temperaturen von 40 bis 180 °C, vorzugsweise 50 bis 150 °C, unter Einhaltung eines NCO/OH-Äquivalent-Verhältnisses von 2:1 bis 400:1, vorzugsweise von 4:1 bis 140:1.

Bei der erstgenannten Variante der separaten Herstellung der nichtionischen Emulgatoren B1) werden diese vorzugsweise unter Einhaltung eines NCO/OH-Äquivalentverhältnisses von 2 : 1 bis 6 : 1 hergestellt. Bei der in situ-Herstellung der Emulgatoren B1) kann selbstverständlich ein hoher Überschuss an Isocyanatgruppen innerhalb des oben genannten breiten Bereichs zur Anwendung gelangen.

Die Reaktion der Polyisocyanatkomonente A) mit den genannten hydrophilen Polyetheralkoholen zu nichtionischen Emulgatoren B1) kann nach dem in EP-B 0 959 087 beschriebenen Verfahren auch so geführt werden, dass die durch NCO/OH-Reaktion primär gebildeten Urethangruppen zumindest anteilig, vorzugsweise zu mindestens 60 mol-%, zu Allophanatgruppen, bezogen auf die Summe aus Urethan- und Allophanatgruppen, weiter umgesetzt werden. In diesem Fall werden Reaktionspartner im oben genannten NCO/OH-Äquivalentverhältnis bei Temperaturen von 40 bis 180 °C, vorzugsweise 50 bis 150 °C, in der Regel in Gegenwart der in den zitierten Patentschriften angeführten, zur Beschleunigung der Allophanatisierungsreaktion geeigneten Katalysatoren, insbesondere Zinkverbindungen, wie z. B. Zink-(II)-n-octanoat, Zink (II)-2-ethyl-1-hexanoat oder Zink-(II)-stearat, zur Reaktion gebracht.

Ein weiterer bevorzugter Typ geeigneter nichtionischer Emulgatoren B) stellen beispielsweise auch Umsetzungsprodukte von monomeren Diisocyanaten oder Diisocyanatgemischen mit den oben genannten ein- oder mehrwertigen hydrophilen Polyetheralkoholen in einem OH/NCO-Äquivalentverhältnis von 0,6 : 1 bis 1,2 : 1 dar. Insbesondere bevorzugt ist die Umsetzung von monomeren Diisocyanaten oder Diisocyanatgemischen mit reinen Polyethylenglycolmonomethyletheralkoholen, die im statistischen Mittel 5 bis 50, bevorzugt 5 bis 25 Ethylenoxideinheiten aufweisen. Die Herstellung solcher Emulgatoren B2) ist ebenfalls bekannt und beispielsweise in EP-B 0 486 881 beschrieben.

Gegebenenfalls können die Emulgatoren B2) aber auch im Anschluss an das Abmischen der Komponenten in den vorstehend beschriebenen Mengenverhältnissen in Gegenwart geeigneter Katalysatoren mit den Polyisocyanaten A) unter Allophanatisierung umgesetzt werden. Dabei entstehen ebenfalls erfindungsgemäße hydrophile Polyisocyanatzusammensetzung, die neben nicht umgesetztem Polyisocyanat A) einen sich in situ aus dem Emulgator B2) und einem Teil der Komponente A) bildenden weiteren nichtionischen Emulgatortyp B3) mit Allophanatstruktur enthalten. Auch die in situ-Herstellung solcher Emulgatoren B3) ist bereits bekannt und beispielsweise in WO 2005/047357 beschrieben.

Die erfindungsgemäßen hydrophil-modifizierten Polyisocyanatzusammensetzungen auf Basis von 1,5-Diisocyanatopentan können anstelle der beispielhaft beschriebenen nichtionischen Emulgatoren auch Emulgatoren mit ionischen, insbesondere anionischen Gruppen enthalten.

Weiterhin Gegenstand der Erfindung sind Polyisocyanatzusammensetzungen, wobei die Emulgatorkomponente B) wenigstens ein Umsetzungsprodukt aus mindestens einem Polyisocyanat der Polyisocyanatkomponente A) mit einer Aminosulfonsäure umfasst.

Solche ionischen Emulgatoren B) stellen bevorzugt sulfonatgruppenhaltige Emulgatoren B4) dar, wie sie beispielsweise nach dem Verfahren der WO 01/88006 durch Umsetzung der Polyisocyanatkomponenten A) mit 2-(Cyclohexylamino)-ethansulfonsäure und/oder 3-(Cyclohexyl-amino)-propansulfonsäure oder auch mit 4-(Cyclohexylamino)-butansulfonsäure erhältlich sind. Diese Umsetzung findet in der Regel bei Temperaturen von 40 bis 150 °C, vorzugsweise 50 bis 130 °C, unter Einhaltung eines Äquivalent-Verhältnisses von NCO-Gruppen zu Aminogruppen von 2:1 bis 400:1, vorzugsweise von 4:1 bis 250:1, statt, wobei zur Neutralisation der Sulfonsäuregruppen tertiäre Amine, vorzugsweise in äquimolarer Menge bezogen auf die Menge an Aminosulfonsäure, mitverwendet werden. Geeignete Neutralisationsamine sind beispielsweise tertiäre Monoamine, wie z. B. Trimethylamin, Triethylamin, Tripropylamin, Tributylamin, Dimethylcyclohexylamin, Diisopropylethylamin, N-Methylmorpholin, N-Ethylmorpholin, N-Methylpiperidin, oder N-Ethylpiperidin, tertiäre Diamine, wie z. B. 1,3-Bis-(dimethylamino)-propan, 1,4-Bis-(dimethylamino)-butan oder N,N'-Dimethylpiperazin, oder, allerdings weniger bevorzugt, Alkanolamine, wie z. B. Dimethylethanolamin, Methyldiethanolamin oder Triethanolamin.

Die bereits für die nichtionischen Emulgatoren B1) beschrieben, kann auch die Umsetzung der Polyisocyanatkomponenten A) mit den genannten Aminosulfonsäuren entweder in einem separaten Reaktionsschritt mit anschließendem Vermischen der erhaltenen ionischen Emulgatoren B4) mit den in eine hydrophile Form zu überführenden Polyisocyanatkomponenten A) oder aber in situ in diesen Polyisocyanatkomponenten erfolgen, wobei sich direkt ein erfindungsgemäßes hydrophiles Polyisocyanatgemisch bildet, das neben nicht umgesetztem Polyisocyanat A) den sich in situ aus den Aminosulfonsäuren, dem Neutralisationsamin und einem Teil der Komponenten A) bildenden Emulgator B4) enthält.

Ein weiterer bevorzugter Typ geeigneter Emulgatoren B) sind solche, die in einem Molekül gleichzeitig ionische und nichtionische Strukturen enthalten. Bei diesen Emulgatoren B5) handelt es sich z. B. um mit tertiären Aminen, wie z. B. den oben genannten Neutralisationsaminen neutralisierte Alkylphenolpolyglykoletherphosphate und -phosphonate oder Fettalkoholpolyglykoletherphosphate und -phosphonate, wie sie beispielsweise in WO 97/31960 zur Hydrophilierung von Polyisocyanaten beschrieben sind, oder auch um mit solchen tertiären Aminen neutralisierte Alkylphenolpolyglykolethersulfate oder Fettalkoholpolyglykolethersulfate.

Bevorzugt enthält die Emulgatorkomponente in diesem Fall wenigstens ein Alkali- oder Ammoniumsalz eines Alkylphenolpolyglykoletherphosphats, Alkylphenolpolyglykoletherphosphonats, Fettalkoholpolyglykoletherphosphats, Fettalkoholpolyglykoletherphosphonats Alkylphenolpolyglykolethersulfats und/oder Fettalkoholpolyglykolethersulfats.

Unabhängig von der Art des Emulgators B) und dessen Herstellung wird dessen Menge bzw. die Menge der bei einer in situ-Herstellung des Emulgators den Polyisocyanaten A) zugesetzten ionischen und/oder nichtionischen Komponenten im allgemeinen so bemessen, dass die letztlich erhaltenen erfindungsgemäßen hydrophil-modifizierten Polyisocyanatzusammensetzung auf Basis von 1,5-Diisocyanatopentan eine die Dispergierbarkeit des Polyisocyanatgemisches gewährleistenden Menge an Emulgator B) enthalten.

Im übrigen werden Art und Mengenverhältnisse der Ausgangskomponenten im Rahmen der gemachten Angaben jeweils so gewählt, dass die resultierenden Polyisocyanatzusammensetzung den a) und b) gemachten Angaben entsprechen, wobei a) die mittlere NCO-Funktionalität vorzugsweise 2,0 bis 8,0, besonders bevorzugt 2,3 bis 6,0, und b) der NCO-Gehalt vorzugsweise 6,0 bis 24,0 Gew.-%, besonders bevorzugt 10,0 bis 23,0 Gew.-%, beträgt.

Die Herstellung der erfindungsgemäßen, aus Polyisocyanatkomponente A) sowie mindestens einem ionischen und/oder nichtionischen Emulgator B) bestehenden hydrophil-modifizierten Polyisocyanatzusammensetzung auf Basis von 1,5-Diisocyanatopentan kann lösemittelfrei oder gegebenenfalls in einem geeigneten, gegenüber Isocyanatgruppen inerten Lösemittel erfolgen. Geeignete Lösemittel sind beispielsweise die an sich bekannten üblichen Lacklösemittel, wie z. B. Ethylacetat, Butylacetat, Ethylenglykolmonomethyl- oder -ethyletheracetat, 1-Methoxypropyl-2-acetat, 3 Methoxy-n-butylacetat, Aceton, 2-Butanon, 4-Methyl-2-pentanon, Cyclohexanon, Toluol, Xylol, Chlorbenzol, Testbenzin, höher substituierte Aromaten, wie sie beispielsweise unter den Bezeichnungen Solventnaphtha, Solvesso®, Isopar®, Nappar® (Deutsche EXXON CHEMICAL GmbH, Köln, DE) und Shellsol® (Deutsche Shell Chemie GmbH, Eschborn, DE) im Handel sind, Kohlensäureester, wie Dimethylcarbonat, Diethylcarbonat, 1,2-Ethylencarbonat und 1,2 Propylencarbonat, Lactone, wie β-Propiolacton, γ-Butyrolacton, ε-Caprolacton und ε-Methylcaprolacton, aber auch Lösemittel wie Propylenglykoldiacetat, Diethylenglykoldimethylether, Dipropylenglykoldimethylether, Diethylenglykolethyl- und -butyletheracetat, N-Methylpyrrolidon und N-Methylcaprolactam, oder beliebige Gemische solcher Lösemittel.

Die erfindungsgemäßen hydrophil-modifizierten Polyisocyanatzusammensetzung auf Basis von 1,5-Diisocyanatopentan stellen klare, farbhelle Polyisocyanatgemische dar, die sich leicht, ohne Einsatz hoher Scherkräfte durch bloßes Einrühren in Wasser dispergieren lassen. Im Vergleich zu den bekannten hydrophilen Polyisocyanaten des Standes der Technik auf Basis von 1,6-Diisocyanatohexan, reicht dabei zum Erhalten sedimentationsstabiler wässriger Dispersionen bei Verwendung jeweils gleicher Emulgatortypen B) überraschenderweise bereits ein deutlich niedrigerer Gesamtgehalt an Emulgator aus.

Dies bedeutet, dass unter Verwendung jeweils gleicher Mengenanteile gleichartiger Emulgatortypen B) hergestellte hydrophil-modifizierte PDI-Polyisocyanatzusammensetzung feinteiligere wässrige Dispersionen ergeben als analog aufgebaute wasserdispergierbare HDI-Polyisocyanate des Standes der Technik.

Darüberhinaus zeigen die mit den erfindungsgemäßen hydrophilen PDI-Polyisocyanatzusammensetzung hergestellten Lackfilme bei gleichem Anteil gleichartiger Emulgatortypen B) auch eine deutlich schnellere Trocknung als wasserdispergierbare HDI-Polyisocyanate, was in einer Reihe von Anwendungen, beispielsweise in der Holz-/Möbellackierung oder der Autoreparatur- und Großfahrzeuglackierung einen erheblichen Vorteil darstellt.

Die hervorragende Dispergierbarkeit bereits bei niedrigen Emulgatorgehalten in Verbindungen mit hohen NCO-Gehalten und -Funktionalitäten stellt insbesondere für die Verwendung der erfindungsgemäßen hydrophil-modifizierten Polyisocyanatzusammensetzung in wässrigen 2K-PUR-Lacken einen Vorteil dar, da sich auf diese Weise hochvernetzte Beschichtungen erhalten lassen, die neben sehr guter Lösemittel- und Chemikalienbeständigkeit aufgrund des niedrigen Gehaltes an hydrophilen Gruppen insbesondere eine ausgezeichnete Wasserfestigkeit aufweisen.

Gegebenenfalls können den erfindungsgemäßen hydrophil-modifizierten Polyisocyanatzusammensetzung auf Basis von 1,5-Diisocyanatopentan vor der Emulgierung beliebige weitere nichthydrophilierte Polyisocyanate, insbesondere PDI-Polyisocyanate der obengenannten Art, zugesetzt werden, wobei die Mengenverhältnisse bevorzugt so gewählt werden, dass die resultierenden Polyisocyanatgemische den vorstehend unter a) bis b) genannten Bedingungen entsprechen, und somit ebenfalls erfindungsgemäße Polyisocyanatzusammensetzung darstellen, da diese im allgemeinen aus Gemischen aus
(i) erfindungsgemäß hydrophil modifizierten Polyisocyanaten auf Basis von 1,5-Diisocyanatopentan und
(ii) unmodifizierten Polyisocyanaten der beispielhaft genannten Art bestehen.

In solchen Mischungen übernehmen die erfindungsgemäßen hydrophil modifizierten Polyisocyanate die Funktion eines Emulgators für den nachträglich zugemischten Anteil an nichthydrophilen Polyisocyanaten.

Die erfindungsgemäßen Polyisocyanatzusammensetzungen stellen wertvolle Ausgangsmaterialien zur Herstellung von Polyurethan-Kunststoffen, insbesondere nach dem Isocyanat-Polyadditionsverfahren, dar und werden hierfür verwendet.

Ebenfalls Gegenstand der Erfindung sind Beschichtungsmittel enthaltend wenigstens eine der zuvor beschriebenen Polyisocyanatzusammensetzungen sowie wenigstens eine gegenüber Isocyanatgruppen reaktive Verbindung und gegebenenfalls weitere Hilfs- und Zusatzstoffe.

Hierzu werden die Polyisocyanatzusammensetzungen vorzugsweise in Form wässriger Emulsionen eingesetzt, die in Kombination mit in Wasser dispergierten Polyhydroxylverbindungen im Sinne von wässrigen Zweikomponenten-Systemen zur Umsetzung gebracht werden können.

Besonders bevorzugt werden die erfindungsgemäßen Polyisocyanatzusammensetzungenals Vernetzer für in Wasser gelöste oder dispergierte Lackbindemittel oder Lackbindemittelkomponenten mit gegenüber Isocyanatgruppen reaktionsfähigen Gruppen, insbesondere alkoholischen Hydroxylgruppen, bei der Herstellung von Beschichtungen unter Verwendung von wässrigen Beschichtungsmitteln auf Basis derartiger Bindemittel bzw. Bindemittelkomponenten verwendet. Die Vereinigung des Vernetzers, gegebenenfalls in emulgierter Form, mit den Bindemitteln bzw. Bindemittelkomponenten kann hierbei durch einfaches Verrühren vor der Verarbeitung der Beschichtungsmittel nach beliebigen Methoden oder auch unter Verwendung von Zweikomponenten-Spritzpistolen erfolgen.

In diesem Zusammenhang seien als Lackbindemittel oder Lackbindemittelkomponenten beispielhaft erwähnt: in Wasser gelöste oder dispergierte, Hydroxylgruppen aufweisende Polyacrylate, insbesondere solche des Molekulargewichtsbereichs 1 000 bis 10 000, die mit organischen Polyisocyanaten als Vernetzer wertvolle Zweikomponenten-Bindemittel darstellen oder in Wasser dispergierte, gegebenenfalls Urethan-modifizierte, Hydroxylgruppen aufweisende Polyesterharze der aus der Polyester- und Alkydharzchemie bekannten Art. Prinzipiell sind als Reaktionspartner für die erfindungsgemäßen Polyisocyanatzusammensetzungen alle in Wasser gelösten oder dispergierten Bindemittel, die gegenüber Isocyanaten reaktive Gruppen aufweisen, geeignet. Hierzu zählen beispielsweise auch in Wasser dispergierte Polyurethane oder Polyharnstoffe, die aufgrund der in den Urethan- bzw. Harnstoffgruppen vorliegenden aktiven Wasserstoffatome mit Polyisocyanaten vernetzbar sind.

Bei der erfindungsgemäßen Verwendung als Vernetzerkomponente für wässrige Lackbindemittel werden die erfindungsgemäßen Polyisocyanatzusammensetzungen im allgemeinen in solchen Mengen eingesetzt, die einem Äquivalentverhältnis von NCO-Gruppen zu gegenüber NCO-Gruppen reaktionsfähigen Gruppen, insbesondere alkoholischen Hydroxylgruppen, von 0,5:1 bis 2:1 entsprechen.

Gegebenenfalls können die erfindungsgemäßen Polyisocyanatzusammensetzungen in untergeordneten Mengen auch nichtfunktionellen wässrigen Lackbindemitteln zur Erzielung ganz spezieller Eigenschaften, beispielsweise als Additiv zur Haftverbesserung zugemischt werden.

Selbstverständlich können die erfindungsgemäßen Polyisocyanatzusammensetzungen auch in mit aus der Polyurethanchemie an sich bekannten Blockierungsmitteln blockierter Form in Kombination mit den obengenannten wässrigen Lackbindemitteln oder Lackbindemittelkomponenten im Sinne von wässrigen Einkomponenten-PUR-Einbrennsystemen eingesetzt werden. Geeignete Blockierungsmittel sind beispielsweise Malonsäurediethylester, Acetessigester, Acetonoxim, Butanonoxim, ε-Caprolactam, 3,5-Dimethylpyrazol, 1,2,4-Triazol, Dimethyl-1,2,4-triazol, Imidazol oder beliebige Gemische dieser Blockierungsmittel.

Als Untergründe für die mit Hilfe der erfindungsgemäßen Polyisocyanatzusammensetzungen formulierten wässrigen Beschichtungen kommen beliebige Substrate in Betracht, wie z. B. Metall, Holz, Glas, Stein, keramische Materialien, Beton, harte und flexible Kunststoffe, Textilien, Leder und Papier, die vor der Beschichtung gegebenenfalls auch mit üblichen Grundierungen versehen werden können.

Im allgemeinen besitzen die mit den erfindungsgemäßen Polyisocyanatzusammensetzungen formulierten wässrigen Beschichtungsmittel, denen gegebenenfalls die auf dem Lacksektor üblichen Hilfs- und Zusatzmittel, wie z. B. Verlaufshilfsmittel, Farbpigmente, Füllstoffe, Mattierungsmittel oder Emulgatoren, einverleibt werden können, schon bei Raumtemperaturtrocknung gute lacktechnische Eigenschaften.

Selbstverständlich lassen sie sich jedoch auch unter forcierten Bedingungen bei erhöhter Temperatur bzw. durch Einbrennen bei Temperaturen bis 260 °C trocknen.

Aufgrund ihrer hervorragenden Wasseremulgierbarkeit, die eine homogene, besonders feinteilige Verteilung in wäßrigen Lackbindemitteln ermöglicht, führt die Verwendung der erfindungsgemäßen Polyisocyanatzusammensetzungen als Vernetzerkomponente für wässrige Polyurethanlacke zu Beschichtungen mit hervorragenden optischen Eigenschaften, insbesondere hohem Oberflächenglanz, Verlauf und hoher Transparenz.

Neben der bevorzugten Verwendung als Vernetzerkomponenten für wässrige 2K-PUR-Lacke eignen sich die erfindungsgemäßen hydrophil-modifizierten Polyisocyanatzusammensetzungen auf Basis von PDI hervorragend als Vernetzer für wässrige Dispersionsklebstoffe, Leder- und Textilbeschichtungen oder Textildruckpasten, als AOX-freie Papierhilfsmittel oder auch als Zusatzmittel für mineralische Baustoffe, beispielsweise Beton- oder Mörtelmassen.

Ebenfalls Gegenstand der Erfindung ist eine Beschichtung, die durch Verwendung der oben beschriebenen Beschichtungsmittel zugänglich wird.

### Beispiele

Alle Prozentangaben beziehen sich, soweit nichts Anderslautendes vermerkt, auf das Gewicht.

Die Bestimmung der NCO-Gehalte erfolgte titrimetrisch nach DIN EN ISO 11909.

Die Rest-Monomeren Gehalte wurden nach DIN EN ISO 10283 gaschromatographisch mit internem Standard gemessen.

Sämtliche Viskositätsmessungen erfolgten mit einem Physica MCR 51 Rheometer der Fa. Anton Paar Germany GmbH (DE) nach DIN EN ISO 3219.

Mittlere Teilchengrößen wässriger Dispersionen wurden mit einem Zetasizer, Typ DTS 5100, der Fa. Malvern Instruments GmbH (DE) bestimmt.

Die Messung der Hazen-Farbzahl erfolgte spektrofotometrisch nach DIN EN 1557 mit einem LICO 400-Spektrofotometer der Fa. Lange, DE.

### Polyisocyanatkomponente A)

### Polyisocyanatkomponente A1)

1000g (6,49 mol) 1,5-Pentamethylendiisocyanat (PDI) wurden in einen Vierhalskolben ausgestattet mit Rührer, Rückflusskühler, N₂-Durchleitungsrohr und Innenthermometer vorgelegt, drei mal bei Raumtemperatur durch Anlegen eines Vakuums von ca. 50 mbar entgast und mit Stickstoff belüftet. Anschließend wurde der Ansatz auf 60°C erwärmt und die Katalysatorlösung (1,5 %ige N,N,N-Trimethyl-N-benzylammoniumhydroxid Lösung in einem 1:1-Gemisch von Methanol und 2-Ethyl-1-hexanol) in einer solchen Geschwindigkeit zudosiert, dass sich die Temperatur des Reaktionsgemisches trotz der exotherm einsetzenden Trimerisierungsreaktion auf maximal 80°C erwärmte. Nach Erreichen eines NCO-Gehalts von 47,8 Gew% wurde mit Dibutylphosphat (äquimolare Menge bezogen auf eingesetztes Trimethylbenzylammoniumhydroxid) die Reaktion gestoppt und das nicht umgesetzte monomere PDI bei einer Temperatur von 140°C und einem Druck von 0,5 mbar im Dünnschichtverdampfer abgetrennt. Es wurde ein praktisch farbloses Polyisocyanuratpolyisocyanat erhalten, das die folgenden Kenndaten aufwies:

| | |
|---|---|
| NCO-Gehalt: | 24,2 % |
| NCO-Funktionalität (ber.): | ca. 3,3 |
| Viskosität (23 °C): | 2200 mPas |
| monomeres PDI: | 0,06 % |
| Farbzahl (APHA): | 30 Hazen |

### Polyisocyanatkomponente A2)

Nach dem für Polyisocyanatkomponente A1) beschriebenen Verfahren und unter Verwendung der dort beschriebenen Katalysatorlösung wurden 1000g (6,49 mol) PDI bis zu einem NCO-Gehalt von 36,7 % umgesetzt. Nach Deaktivierung des Katalysators und anschließender destillativer Entfernung des nicht umgesetzten monomeren PDI mit Hilfe eines Dünnschichtverdampfers bei 140°C und 0,5 mbar erhielt man ein praktisch farbloses Polyisocyanuratpolyisocyanat, das die folgenden Kenndaten aufwies:

| | |
|---|---|
| NCO-Gehalt: | 21,7 % |
| NCO-Funktionalität (ber.): | ca. 3,5 |
| Viskosität (23 °C): | 9850 mPas |
| monomeres PDI: | 0,05 % |
| Farbzahl (APHA): | 34 Hazen |

### Beispiel 1)

### (erfindungsgemäß, Emulgatortyp P1)

870 g (4,50 val) der Polyisocyanatkomponente A2) wurden bei 100 °C unter trockenem Stickstoff und Rühren vorgelegt, innerhalb von 30 min mit 130 g (0,37 val) eines auf Methanol gestarteten, monofunktionellen Polyethylenoxidpolyethers eines mittleren Molekulargewichtes von 350 versetzt und bei dieser Temperatur weiter gerührt, bis der NCO-Gehalt der Mischung nach etwa 2 h auf einen Wert von 17,3 % gefallen war. Nach Abkühlen auf Raumtemperatur lag ein farbloses, klares Polyisocyanatgemisch mit folgenden Kenndaten vor:

| | |
|---|---|
| NCO-Gehalt: | 17,3 % |
| NCO-Funktionalität: | 3,2 |
| Viskosität (23 °C): | 9600 mPas |
| Farbzahl (APHA): | 28 Hazen |

### Beispiel 2)

### (Vergleich, hydrophiles HDI-Polyisocyanat gemäß EP-B 0 540 985, Emulgatortyp B1)

870 g (4,50 val) eines Isocyanuratgruppen-haltigen Polyisocyanates auf Basis von HDI mit einem NCO-Gehalt von 21,7 %, einer mittleren NCO-Funktionalität von 3,5 (nach GPC), einem Gehalt an monomerem HDI von 0,1 % und einer Viskosität von 3000 mPas (23 °C) wurden bei 100 °C unter trockenem Stickstoff und Rühren vorgelegt, innerhalb von 30 min mit 130 g (0,37 val) eines auf Methanol gestarteten, monofunktionellen Polyethylenoxidpolyethers eines mittleren Molekulargewichtes von 350 versetzt und bei dieser Temperatur weiter gerührt, bis der NCO-Gehalt der Mischung nach etwa 2 h auf einen Wert von 17,4 % gefallen war. Nach Abkühlen auf Raumtemperatur lag ein farbloses, klares Polyisocyanatgemisch mit folgenden Kenndaten vor:

| | |
|---|---|
| NCO-Gehalt: | 17,4 % |
| NCO-Funktionalität: | 3,2 |
| Viskosität (23 °C): | 2800 mPas |
| Farbzahl: | 40 APHA |

### Beispiel 3)

### (erfindungsgemäß, Emulgatortyp B1)

850 g (4,39 val) der Polyisocyanatkomponente A2) wurden bei 100 °C unter trockenem Stickstoff und Rühren vorgelegt, innerhalb von 30 min mit 150 g (0,30 val) eines auf Methanol gestarteten, monofunktionellen Polyethylenoxidpolyethers eines mittleren Molekulargewichtes von 500 versetzt und anschließend bei dieser Temperatur weitergerührt, bis der NCO-Gehalt der Mischung nach etwa 2 h auf den einer vollständigen Urethanisierung entsprechenden Wert von 17,2 % gefallen ist. Anschließend wurden 0,01 g Zink-(II)-2-ethyl-1-hexanoat als Allophanatisierungskatalysator zugegeben. Dabei stieg die Temperatur des Reaktionsgemisches aufgrund der freiwerdenden Reaktionswärme bis auf 107 °C an. Nach Abklingen der Exothermie, etwa 30 min nach Katalysatorzugabe, wurde die Reaktion durch Zugabe von 0,01 g Benzoylchlorid abgebrochen und das Reaktionsgemisch auf Raumtemperatur abgekühlt. Es lag ein erfindungsgemäßes, praktisch farbloses klares Polyisocyanatgemisch mit folgenden Kenndaten vor:

| | |
|---|---|
| Festgehalt: | 100 % |
| NCO-Gehalt: | 16,4 % |
| NCO-Funktionalität: | 4,0 |
| Viskosität (23 °C): | 16400 mPas |
| Farbzahl: | 50 APHA |

### Beispiel 4)

### (Vergleich, hydrophiles HDI-Polyisocyanat gemäß EP-B 0 959 087, Emulgatortyp B1)

850 g (4,39 val) des bei der Herstellung des Vergleichspolyisocyanates A2) beschriebenen Isocyanuratgruppen-haltigen Polyisocyanates auf Basis von HDI wurden bei 100 °C unter trockenem Stickstoff und Rühren vorgelegt, innerhalb von 30 min mit 150 g (0,30 val) eines auf Methanol gestarteten, monofunktionellen Polyethylenoxidpolyethers eines mittleren Molekulargewichtes von 500 versetzt und anschließend bei dieser Temperatur weitergerührt, bis der NCO-Gehalt der Mischung nach etwa 2 h auf den einer vollständigen Urethanisierung entsprechenden Wert von 17,2 % gefallen ist. Anschließend wurden 0,01 g Zink-(II)-2-ethyl-1-hexanoat als Allophanatisierungskatalysator zugegeben. Dabei stieg die Temperatur des Reaktionsgemisches aufgrund der freiwerdenden Reaktionswärme bis auf 102 °C an. Nach Abklingen der Exothermie, etwa 30 min nach Katalysatorzugabe, wurde die Reaktion durch Zugabe von 0,01 g Benzoylchlorid abgebrochen und das Reaktionsgemisch auf Raumtemperatur abgekühlt. Es lag ein erfindungsgemäßes, praktisch farbloses klares Polyisocyanatgemisch mit folgenden Kenndaten vor:

| | |
|---|---|
| NCO-Gehalt: | 16,4 % |
| NCO-Funktionalität: | 4,0 |
| Viskosität (23 °C): | 7100 mPas |
| Farbzahl: | 38 APHA |

### Beispiel 5)

### (erfindungsgemäß, Emulgatortyp B4)

Eine Mischung aus 980 g (5,65 val) der Polyisocyanatkomponente A1) wurden zusammen mit 20 g (0,09 val) 3-(Cyclohexylamino)-propansulfonsäure (CAPS) und 11 g (0,09 mol) Dimethylcyclohexylamin unter trockenem Stickstoff 3 Stunden bei 80 °C gerührt. Nach Abkühlen auf Raumtemperatur lag ein erfindungsgemäßes praktisch farbloses klares Polyisocyanatgemisch mit folgenden Kenndaten vor:

| | |
|---|---|
| NCO-Gehalt: | 23,1 % |
| NCO-Funktionalität: | 3,2 |
| Viskosität (23 °C): | 2800 mPas |
| Farbzahl: | 45 APHA |

### Beispiel 6)

### (Vergleich, hydrophiles HDI-Polyisocyanat gemäß WO 01/88006, Emulgatortyp B4)

980 g (5,37 val) eines Isocyanuratgruppen-haltigen Polyisocyanates auf Basis von HDI mit einem NCO-Gehalt von 23,0 %, einer mittleren NCO-Funktionalität von 3,3 (nach GPC), einem Gehalt an monomerem HDI von 0,1 % und einer Viskosität von 1200 mPas (23 °C) wurden zusammen mit 20 g (0,09 val) 3-(Cyclohexylamino)-propansulfonsäure (CAPS) und 11 g (0,09 mol) Dimethylcyclohexylamin unter trockenem Stickstoff 3 Stunden bei 80 °C gerührt. Nach Abkühlen auf Raumtemperatur lag ein erfindungsgemäßes praktisch farbloses klares Polyisocyanatgemisch mit folgenden Kenndaten vor:

| | |
|---|---|
| NCO-Gehalt: | 21,9 % |
| NCO-Funktionalität: | 3,2 |
| Viskosität (23 °C): | 1700 mPas |
| Farbzahl: | 41 APHA |

### Beispiel 7)

### (erfindungsgemäß, Emulgatortyp B5)

890 g (4,60 val) der Polyisocyanatkomponente A2) wurden 12 Stunden bei 80°C mit 110 g eines Emulgatorgemisches, bestehend aus 97 g eines ethoxylierten Tridecylalkoholphosphats (Rhodafac® RS-710, Fa. Rhodia) und 13 g Dimethylcyclohexylamin als Neutralisationsamin, gerührt. Nach Abkühlen auf Raumtemperatur liegt ein farbloses klares Polyisocyanatgemisch mit folgenden Kenndaten vor:

| | |
|---|---|
| NCO-Gehalt: | 19,3 % |
| NCO-Funktionalität: | 3,5 |
| Viskosität (23 °C): | 9200 mPas |
| Farbzahl: | 33 APHA |

### Beispiel 8)

### (Vergleich, hydrophiles HDI-Polyisocyanat gemäß WO 97/31960, Emulgatortyp B4)

890 g (4,60 val) des bei der Herstellung der Polyisocyanatkomponente A1) beschriebenen Isocyanuratgruppen-haltigen Polyisocyanates auf Basis von HDI werden 12 Stunden bei 80°C mit 110 g eines Emulgatorgemisches, bestehend aus 97 g eines ethoxylierten Tridecylalkoholphosphats (Rhodafac® RS-710, Fa. Rhodia) und 13 g Dimethylcyclohexylamin als Neutralisationsamin, gerührt. Nach Abkühlen auf Raumtemperatur liegt ein farbloses klares Polyisocyanatgemisch mit folgenden Kenndaten vor:

| | |
|---|---|
| NCO-Gehalt: | 19,3 % |
| NCO-Funktionalität: | 3,5 |
| Viskosität (23 °C): | 2900 mPas |
| Farbzahl: | 26 APHA |

### Beispiel 9

### (Herstellung von Emulsionen)

Jeweils 28 g der erfindungsgemäßen Polyisocyanatzusammensetzungen (Polyisocyanatgemische) aus Beispiel 1, 3, 5 und 7 sowie der Vergleichspolyisocyanate aus Beispiel 2, 4, 6 und 8 wurden sowohl colösungsmittelfrei als auch mit jeweils 12 g 1-Methoxypropyl-2-acetat (MPA) verdünnt, in einem Erlenmeyerkolben mit 100 g entionisiertem Wasser versetzt und anschließend jeweils 1 min mit Hilfe eines Magnetrührer bei 900 U/min gerührt. Von den entstandenen Emulsionen wurde als Maß für die Dispergierbarkeit der unterschiedlichen Polyisocyanatgemische mit Hilfe eines Gerätes "Zetasizer" der Fa. Malvern Instruments die mittlere Teilchengröße bestimmt. Die nachfolgende Tabelle zeigt die gefundenen Werte.

| Polyisocyanatgemisch aus | mittlere Teilchengröße [nm] Colösungsmittel-frei | mittlere Teilchengröße [nm] 70 %-ig in MPA |
|---|---|---|
| Beispiel 1 | 121 | 344 |
| Beispiel 2 (Vergleich) | 138 | 594 |
| Beispiel 3 | 96 | 75 |
| Beispiel 4 (Vergleich) | 118 | 85 |
| Beispiel 5 | 228 | 211 |
| Beispiel 6 (Vergleich) | 329 | 256 |
| Beispiel 7 | 223 | 274 |
| Beispiel 8 (Vergleich) | 240 | 290 |

Der Vergleich zeigt, daß die erfindungsgemäßen hydrophil-modifizierten Polyisocyanatgemische auf Basis von PDI aus Beispiel 1, 3, 5 und 7 gegenüber den unter Verwendung jeweils gleicher Mengenanteile gleichartiger Emulgatortypen B) hergestellten wasserdispergierbaren HDI-Polyisocyanate aus Beispiel 2, 4, 6 und 8 eine deutlich bessere Dispergierbarkeit aufweisen.

### Beispiel 10 (Verwendung)

100 Gew.-Teile einer handelsüblichen wässrigen hydroxyfunktionellen Polyacrylatdispersion mit einem Festkörpergehalt von 45 % und einem OH-Gehalt von 3.9 %, bezogen auf Festharz, erhältlich unter der Bezeichnung Bayhydrol® A 2470 (Bayer MaterialScience AG, Leverkusen), wurden mit 1,2 Gew.-Teilen eines handelsüblichen Entschäumers (Surfynol 104BC, Air Products GmbH) gemischt. Diesem Ansatz wurden 37,7 Gew.-Teile des erfindungsgemäßen Polyisocyanates aus Beispiel 1 zugesetzt (entsprechend einem Äquivalentverhältnis von Isocyanatgruppen zu alkoholischen Hydroxylgruppen von 1,5 : 1) und die Mischung durch fünfminütiges Rühren mit 1000 U/min homogenisiert. Anschließend wurde der Festkörpergehalt durch Zugabe von Wasser auf 45 % eingestellt.

Zum Vergleich wurden nach dem gleichen Verfahren aus jeweils 100 Gew.-Teilen Bayhydrol® A 2470 und den Polyisocyanaten nach Beispiel 2 bis 8 (jeweils entsprechend einem Äquivalentverhältnis von Isocyanatgruppen zu alkoholischen Hydroxylgruppen von 1,5 : 1) Klarlacke hergestellt.

Die Verarbeitungszeit der applikationsfertigen Ansätze betrug in allen Fällen ca. 4 Stunden. Die Lacke wurden in einer Nassfilm-Schichtdicke von 150 µm (ca. 65 µm trocken) auf Glasplatten appliziert, je einmal bei Raumtemperatur (ca. 25°C) und jeweils nach 15- minütigem Ablüften unter forcierten Bedingungen (30 min / 60 °C) getrocknet. Die nachfolgende Tabelle zeigt lacktechnische Eigenschaften der erhaltenen Beschichtungen.

| **Polyisocyanat aus** | | **Beispiel 1** | **Beispiel 2** (Vergleich) | **Beispiel 3** | **Beispiel 4** (Vergleich) | **Beispiel 5** | **Beispiel 6** (Vergleich) |
|---|---|---|---|---|---|---|---|
| **Polyisocyanat** [Gew.-Teile] ^{a)} | | 37,7 | 37,4 | 39,7 | 39,7 | 28,2 | 29,7 |
| **Trocknung** ^{b)} min bei 23°C | T1 | 60 | 110 | 40 | 55 | 35 | 45 |
| | T2 | 310 | 480 | 330 | 430 | 240 | 280 |
| min bei 60°C | T2 | 25 | 50 | sofort | 30 | sofort | 20 |
| | T4 | 35 | 90 | 30 | 70 | 20 | 25 |
| **Pendelhärte** ^{c)} [s] nach 1 d / 7 d | | 89 / 169 | 88 / 162 | 84 / 125 | 79 / 155 | 101 / 196 | 97 / 197 |
| **Glanz 20° / 60°** | | 86 / 92 | 85/91 | 86/92 | 86/92 | 85/92 | 86/91 |
| **Glanzschleier (Haze)** | | 14 | 18 | 11 | 15 | 17 | 15 |
| **Lösemittelbeständigkeit ^{d)}** | | | | | | | |
| Wasser (30 min) | | 0 | 0 | 1 | 1 | 0 | 0 |
| Xylol (5 min) | | 0 | 0 | 0 | 1 | 0 | 0 |
| MPA (5 min) | | 1 | 1 | 1 | 1 | 0 | 0 |
| Ethylacetat (5 min) | | 1 | 2 | 1 | 1 | 1 | 1 |
| Aceton (5 min) | | 3 | 3 | 3 | 3 | 1 | 1 |

| | | | | | | | |
|---|---|---|---|---|---|---|---|
| ^{a)} bezogen auf 100 Gew.-Teile Bayhydrol A 2470 ^{b)} Bestimmung der Trocknung nach DIN 53 150 ^{c)} Pendelhärte nach König (DIN 53157), gemessen an RT-getrockneten Lackfilmen ^{d)} gemessen an RT-getrockneten Lackfilmen nach 7 Tagen; Bewertung: 0 - 5 (0 = Lackfilm unverändert; 5 = völlig aufgelöst) | | | | | | | |

Der Vergleich zeigt, dass mit Hilfe der erfindungsgemäßen hydrophil-modifizierten Polyisocyanatzusammensetzungen aus Beispiel 1, 3 und 5 Beschichtungen erhalten werden, die bezüglich ihrer lacktechnischen Eigenschaften solchen, die unter Verwendung der analog aufgebauten hydrophilen HDI-Polyisocyanate aus Beispiel 2, 4 und 6 hergestellt wurden, mindestens gleichwertig sind und sich gegenüber diesen insbesondere durch eine deutlich schnellere Trocknung auszeichnen.

## Patentansprüche

1. Polyisocyanatzusammensetzung, umfassend eine Polyisocyanatkomponente A) und eine Emulgatorkomponente B), **dadurch gekennzeichnet, dass** die Polyisocyanatkomponente A) aus wenigstens einem Polyisocyanat auf Basis von 1,5-Diisocyanatopentan besteht und die Emulgatorkomponente B) wenigstens einen ionischen und/oder nichtionischen Emulgator enthält, wobei die Polyisocyanatkomponente A) wenigstens ein, durch Modifizierung von 1,5-Diisocyanatopentan erhältliches Polyisocyanat mit Uretdion-, Isocyanurat-, Allophanat-, Biuret-, Iminooxadiazindion- und/oder Oxadiazintrionstruktur umfasst.

2. Polyisocyanatzusammensetzung gemäß Anspruch 1, **dadurch gekennzeichnet, dass** die Zusammensetzung eine mittlere Isocyanatfunktionalität von 1,8 bis 8,0, bevorzugt von 2,0 bis 7,0 und besonders bevorzugt von 2,3 bis 6,0 aufweist und/oder einen Gehalt an Isocyanatgruppen von 5,0 bis 26,0 Gew.-%, bevorzugt 6,0 bis 24,0 Gew.-% und besonders bevorzugt von 10,0 bis 23,0 Gew.-% aufweist.

3. Polyisocyanatzusammensetzung gemäß Anspruch 1 oder 2, **dadurch gekennzeichnet, dass** die Polyisocyanatkomponente A) wenigstens ein, durch Modifizierung von 1,5-Diisocyanatopentan erhältliches Polyisocyanat mit Isocyanurat- und/oder Allophanatstruktur umfasst.

4. Polyisocyanatzusammensetzung gemäß Anspruch 3, **dadurch gekennzeichnet, dass** die Polyisocyanatkomponente A) aus wenigstens einem Polyisocyanurat mit einer mittleren NCO-Funktionalität von 2,3 bis 5,0 und/oder einem Gehalt an Isocyanatgruppen von 11,0 bis 26,0 Gew.-% besteht.

5. Polyisocyanatzusammensetzung gemäß einem der Ansprüche 1 bis 4, **dadurch gekennzeichnet, dass** die Emulgatorkomponente B) wenigstens ein Umsetzungsprodukt aus mindestens einem Polyisocyanat der Polyisocyanatkomponente A) mit einem hydrophilen Polyetheralkohol umfasst.

6. Polyisocyanatzusammensetzung gemäß Anspruch 5, **dadurch gekennzeichnet, dass** der hydrophile Polyetheralkohol ein Polyethylenglycolmonomethyletheralkohol ist, der im statistischen Mittel 5 bis 50 und bevorzugt 5 bis 25 Ethylenoxideinheiten enthält.

7. Polyisocyanatzusammensetzung gemäß einem der Ansprüche 5 oder 6, **dadurch gekennzeichnet, dass** das Umsetzungsprodukt, bevorzugt ≥ 60 mol-%, Allophanatgruppen, bezogen auf die Summe aus Urethan- und Allophanatgruppen, enthält.

8. Polyisocyanatzusammensetzung gemäß einem der Ansprüche 1 bis 4, **dadurch gekennzeichnet, dass** die Emulgatorkomponente B) wenigstens ein Umsetzungsprodukt aus mindestens einem Diisocyanat mit mindestens einem hydrophilen Polyetheralkohol umfasst.

9. Polyisocyanatzusammensetzung gemäß einem der Ansprüche 1 bis 4, **dadurch gekennzeichnet, dass** die Emulgatorkomponente B) wenigstens ein Umsetzungsprodukt aus mindestens einem
Polyisocyanat der Polyisocyanatkomponente A) mit einer Aminosulfonsäure umfasst.

10. Polyisocyanatzusammensetzung gemäß Anspruch 9, **dadurch gekennzeichnet, dass** die Aminosulfonsäure aus der Gruppe von 2-(Cyclohexylamino)-ethansulfonsäure, 3-(Cyclohexyl-amino)-propansulfonsäure und 4-(Cyclohexylamino)-butansulfonsäure ausgewählt wird.

11. Polyisocyanatzusammensetzung gemäß einem der Ansprüche 1 bis 4, **dadurch gekennzeichnet, dass** die Emulgatorkomponente B) wenigstens ein Alkali- oder Ammoniumsalz eines Alkylphenolpolyglykoletherphosphats, Alkylphenolpolyglykoletherphosphonats, Fettalkoholpolyglykoletherphosphats, Fettalkoholpolyglykoletherphosphonats Alkylphenolpolyglykolethersulfats und/oder Fettalkoholpolyglykolethersulfats umfasst.

12. Verfahren zur Herstellung der Polyisocyanatzusammensetzung gemäß einem der Ansprüche 1 bis 11, **dadurch gekennzeichnet, dass** die Polyisocyanatkomponente A) mit der Emulgatorkomponente B) vermischt wird oder die Emulgatorkomponente B) durch anteilige Umsetzung von Polyisocyanaten der Polyisocyanatkomponente A) mit ionischen und/oder nichtionischen Verbindungen, die gegenüber Isocyanatgruppen reaktive Gruppen tragen, in der Polyisocyanatkomponente A) gebildet wird.

13. Verwendung der Polyisocyanatzusammensetzung gemäß einem der Ansprüche 1 bis 11 zur Herstellung von Polyurethankunststoffen.

14. Beschichtungsmittel, enthaltend wenigstens eine Polyisocyanatzusammensetzung gemäß einem der Ansprüche 1 bis 11 sowie wenigstens eine gegenüber Isocyanatgruppen reaktive Verbindung und gegebenenfalls weitere Hilfs- und Zusatzstoffen.

15. Beschichtung, erhältlich durch Verwendung eines Beschichtungsmittels gemäß Anspruch 14.

## Claims

1. Polyisocyanate composition comprising a polyisocyanate component A) and an emulsifier component B), **characterized in that** the polyisocyanate component A) consists of at least one polyisocyanate based on 1,5-diisocyanatopentane and the emulsifier component B) comprises at least one ionic and/or nonionic emulsifier, wherein the polyisocyanate component A) comprises at least one polyisocyanate which is obtainable by modification of 1,5-diisocyanatopentane and which has uretdione, isocyanurate, allophanate, biuret, iminooxadiazinedione and/or oxadiazinetrione structure.

2. Polyisocyanate composition according to Claim 1, **characterized in that** the composition has an average isocyanate functionality of 1.8 to 8.0, preferably of 2.0 to 7.0, and more preferably of 2.3 to 6.0, and/or has an isocyanate group content of 5.0 to 26.0 wt%, preferably 6.0 to 24.0 wt%, and more preferably of 10.0 to 23.0 wt%.

3. Polyisocyanate composition according to Claim 1 or 2, **characterized in that** the polyisocyanate component A) comprises at least one polyisocyanate which is obtainable by modification of 1,5-diisocyanatopentane and which has isocyanurate and/or allophanate structure.

4. Polyisocyanate composition according to Claim 3, **characterized in that** the polyisocyanate component A) consists of at least one polyisocyanurate having an average NCO functionality of 2.3 to 5.0 and/or an isocyanate group content of 11.0 to 26.0 wt%.

5. Polyisocyanate composition according to any of Claims 1 to 4, **characterized in that** the emulsifier component B) comprises at least one reaction product of at least one polyisocyanate of the polyisocyanate component A) with a hydrophilic polyether alcohol.

6. Polyisocyanate composition according to Claim 5, **characterized in that** the hydrophilic polyether alcohol is a polyethylene glycol monomethyl ether alcohol which contains on average 5 to 50 and preferably 5 to 25 ethylene oxide units.

7. Polyisocyanate composition according to either of Claims 5 and 6, **characterized in that** the reaction product comprises preferably ≥ 60 mol% of allophanate groups, based on the sum of urethane groups and allophanate groups.

8. Polyisocyanate composition according to any of Claims 1 to 4, **characterized in that** the emulsifier component B) comprises at least one reaction product of at least one diisocyanate with at least one hydrophilic polyether alcohol.

9. Polyisocyanate composition according to any of Claims 1 to 4, **characterized in that** the emulsifier component B) comprises at least one reaction product of at least one polyisocyanate of the polyisocyanate component A) with an aminosulfonic acid.

10. Polyisocyanate composition according to Claim 9, **characterized in that** the aminosulfonic acid is selected from the group consisting of 2-(cyclohexylamino)ethanesulfonic acid, 3-(cyclohexylamino)propanesulfonic acid, and 4-(cyclohexylamino)butanesulfonic acid.

11. Polyisocyanate composition according to Claim 1 to 4, **characterized in that** the emulsifier component B) comprises at least one alkali metal salt or ammonium salt of an alkylphenol polyglycol ether phosphate, alkylphenol polyglycol ether phosphonate, fatty alcohol polyglycol ether phosphate, fatty alcohol polyglycol ether phosphonate, alkylphenol polyglycol ether sulfate and/or fatty alcohol polyglycol ether sulfate.

12. Method for producing the polyisocyanate composition according to any of Claims 1 to 11, **characterized in that** the polyisocyanate component A) is mixed with the emulsifier component B), or the emulsifier component B) is formed in the polyisocyanate component A) by proportional reaction of polyisocyanates of the polyisocyanate component A) with ionic and/or nonionic compounds which carry groups that are reactive toward isocyanate groups.

13. Use of the polyisocyanate composition according to any of Claims 1 to 11 for producing polyurethane plastics.

14. Coating composition comprising at least one polyisocyanate composition according to any of Claims 1 to 11 and also at least one compound that is reactive toward isocyanate groups, and, optionally, further auxiliaries and adjuvants.

15. Coating obtainable by using a coating composition according to Claim 14.

## Revendications

1. Composition de polyisocyanate, comprenant un composant polyisocyanate A) et un composant émulsifiant B), **caractérisée en ce que** le composant polyisocyanate A) est constitué par au moins un polyisocyanate à base de 1,5-diisocyanatopentane, et le composant émulsifiant B) contient au moins un émulsifiant ionique et/ou non ionique, le composant polyisocyanate A) comprenant au moins un polyisocyanate contenant une structure uretdione, isocyanurate, allophanate, biuret, iminooxadiazine-dione et/ou oxadiazine-trione, pouvant être obtenu par modification de 1,5-diisocyanatopentane.

2. Composition de polyisocyanate selon la revendication 1, **caractérisée en ce que** la composition présente une fonctionnalité isocyanate moyenne de 1,8 à 8,0, de préférence de 2,0 à 7,0, et de manière particulièrement préférée de 2,3 à 6,0, et/ou présente une teneur en groupes isocyanate de 5,0 à 26,0 % en poids, de préférence de 6,0 à 24,0 % en poids, et de manière particulièrement préférée de 10,0 à 23,0 % en poids.

3. Composition de polyisocyanate selon la revendication 1 ou 2, **caractérisée en ce que** le composant polyisocyanate A) comprend au moins un polyisocyanate contenant une structure isocyanurate et/ou allophanate, pouvant être obtenu par modification de 1,5-diisocyanatopentane.

4. Composition de polyisocyanate selon la revendication 3, **caractérisée en ce que** le composant polyisocyanate A) est constitué par au moins un polyisocyanurate ayant une fonctionnalité NCO moyenne de 2,3 à 5,0 et/ou une teneur en groupes isocyanate de 11,0 à 26,0 % en poids.

5. Composition de polyisocyanate selon l'une quelconque des revendications 1 à 4, **caractérisée en ce que** le composant émulsifiant B) comprend au moins un produit de réaction d'au moins un polyisocyanate du composant polyisocyanate A) avec un polyéther-alcool hydrophile.

6. Composition de polyisocyanate selon la revendication 5, **caractérisée en ce que** le polyéther-alcool hydrophile est un polyéthylène glycol-éther monométhylique-alcool, qui contient en moyenne statistique 5 à 50, et de préférence 5 à 25 unités oxyde d'éthylène.

7. Composition de polyisocyanate selon l'une quelconque des revendications 5 et 6, **caractérisée en ce que** le produit de réaction contient de préférence ≥ 60 % en moles de groupes allophanate, par rapport à la somme des groupes uréthane et allophanate.

8. Composition de polyisocyanate selon l'une quelconque des revendications 1 à 4, **caractérisée en ce que** le composant émulsifiant B) comprend au moins un produit de réaction d'au moins un diisocyanate avec au moins un polyéther-alcool hydrophile.

9. Composition de polyisocyanate selon l'une quelconque des revendications 1 à 4, **caractérisée en ce que** le composant émulsifiant B) comprend au moins un produit de réaction d'au moins un polyisocyanate du composant polyisocyanate A) avec un acide aminosulfonique.

10. Composition de polyisocyanate selon la revendication 9, **caractérisée en ce que** l'acide aminosulfonique est choisi dans le groupe constitué par l'acide 2-(cyclohexylamino)-éthanesulfonique, l'acide 3-(cyclohexylamino)-propanesulfonique et l'acide 4-(cyclohexylamino)-butanesulfonique.

11. Composition de polyisocyanate selon l'une quelconque des revendications 1 à 4, **caractérisée en ce que** le composant émulsifiant B) comprend au moins un sel d'alcali ou d'ammonium d'un alkylphénol-polyglycol-éther-phosphate, d'un alkylphénol-polyglycol-éther-phosphonate, d'un alcool gras-polyglycol-éther-phosphate, d'un alcool gras-polyglycol-éther-phosphonate, d'un alkylphénol-polyglycol-éther-sulfate et/ou d'un alcool gras-polyglycol-éther-sulfate.

12. Procédé de fabrication de la composition de polyisocyanate selon l'une quelconque des revendications 1 à 11, **caractérisé en ce que** le composant polyisocyanate A) est mélangé avec le composant émulsifiant B) ou le composant émulsifiant B) est formé dans le composant polyisocyanate A) par mise en réaction proportionnelle de polyisocyanates du composant polyisocyanate A) avec des composés ioniques et/ou non ioniques, qui portent des groupes réactifs avec les groupes isocyanate.

13. Utilisation de la composition de polyisocyanate selon l'une quelconque des revendications 1 à 11 pour la fabrication de matières plastiques de polyuréthane.

14. Agent de revêtement, contenant au moins une composition de polyisocyanate selon l'une quelconque des revendications 1 à 11, ainsi qu'au moins un composé réactif avec les groupes isocyanate, et éventuellement des adjuvants et additifs supplémentaires.

15. Revêtement, pouvant être obtenu par utilisation d'un agent de revêtement selon la revendication 14.
